# EUROPEAN PATENT APPLICATION

(11) **EP 3 026 953 A1**
(43) Date of publication of application: **01.06.2016**
(21) Application number: 15154980.5
(22) Date of filing: 13.02.2015
(51) Int. Cl.: H04W 24/04

(54) **Method of connecting to a wireless data network and wireless connection system through tethering**

(30) Priority: 27.11.2014 TW 103141271
(71) Applicant: Compal Broadband Networks Inc., 114 Taipei City (TW)
(72) Inventor: Chang, Chao-Chin, Hsinchu County 302 (TW); Huang, Yan-Wei, Hsinchu County 302 (TW)
(74) Representative: Straus, Alexander

(57) **Abstract**

A method of connecting to a wireless data network which comprises determining whether a network connection of a network device is normal; the network device establishing a wireless connection with a mobile device when the network connection is abnormal; and the network device connecting to a wide area network through the wireless connection and the mobile device.

## Description

### Field of the Invention

The present invention relates to a method of connecting to a wireless data network and a system for connecting to a wireless data network, and more particularly, to a method of connecting to a wireless data network and a system for connecting to a wireless data network in which a network device is capable of connecting to internet through a mobile device.

### Background of the Invention

As the information technology and the internet become popular, the requirement and dependence of people on network service is increasing. For example, users may connect to wide area network, such as the internet, through network devices, such as routers. However, when the connection between the network device in residence and the wide area network is disconnected, it causes great inconvenience. Fortunately, as wireless communication technologies evolve, cellular system provides not only voice service but also wideband data service. When the connection between the network device in residence and the wide area network is disconnected, the prior arts also provides connection methods of the network device utilizing a cellular network interface card to connect to the wide area network through the cellular system.

In the prior art, the network interface card may be built inside the network device or connected to the network device externally, such that the network device may connect to the wide area network through the cellular system. However, even the network device have a network interface card built in, the user still needs to insert a Subscriber Identity Module (i.e., SIM card), which is able to access the internet, into the network interface card. Either applying for another SIM card, or taking out the SIM card from the cell phone of the user when it is necessary to connect through the cellular system causes inconvenience. The network interface card would also increase production cost of the interwork devices. From another perspective, when the network device is externally connected to the network interface card, compatibility problems between the network device and the network interface card need to be solved. For example, to achieve a plug and play property of the network device, drivers of network interface card provided by various vendors need to be installed in the network device before leaving factory, increasing complexity of developing the network device. Furthermore from a hardware's point of view, the network device needs to additionally dispose a connection port, e.g., a Universal Serial Bus (USB) port, to connect to the network interface card, which increases the production cost of the network device. Therefore, it is necessary to improve the prior art methods of connecting.

### Summary of the Invention

It is therefore a primary objective of the present invention to provide a method of connecting to a wireless data network and a system for connecting to a wireless data network capable of connecting to internet through a mobile device.

This is achieved by a method of connecting to a wireless data network and a system for connecting to a wireless data network according to independent claims 1 and 8 respectively found here below. The dependent claims pertain to corresponding further developments and improvements.

As will be seen more clearly from the detailed description following below, the claimed method of connecting to a wireless data network comprises determining whether a network connection of a network device is normal; the network device establishing a wireless connection with a mobile device when the network connection is not normal; and the network device connecting to a wide area network through the wireless connection and the mobile device.

In another aspect, as will be seen more clearly from the detailed description following below, the claimed a system for connecting to a wireless data network comprises a network device, configured to connect to a wide area network through a network connection; and a mobile device, configured to connect to the wide area network through a cellular network; wherein the network device establishes a wireless connection with the mobile device when the network connection is not normal, such that the network device connects to the wide area network through the wireless connection and the mobile device.

### Brief Description of the Drawings

FIG. 1 is a schematic diagram of a connection system.
FIG. 2 is a schematic diagram of a wireless connection system according to an embodiment of the present invention.
FIG. 3 is a schematic diagram of a wireless connection process according to an embodiment of the present invention.

### Detailed Description

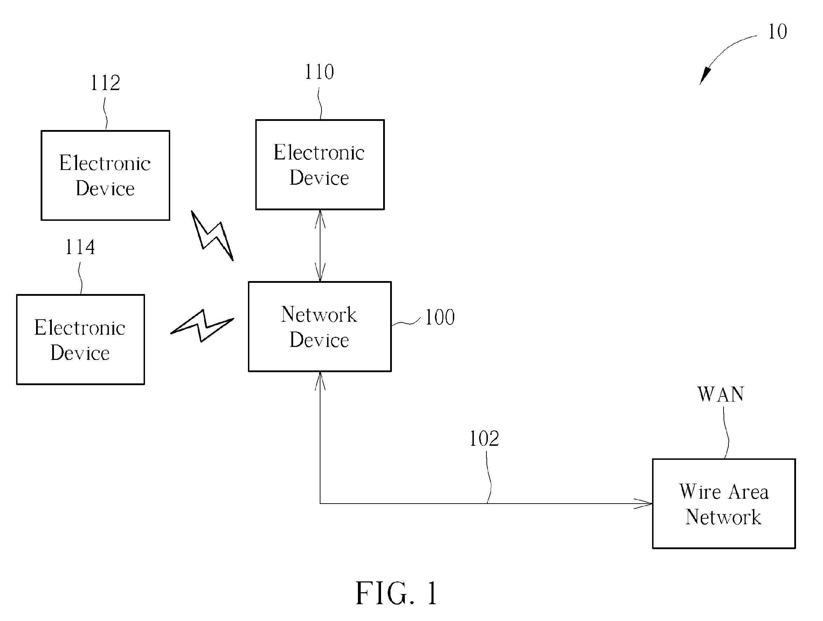

FIG. 1 is a schematic diagram of a connection system 10. The connection system 10 comprises a network device 100. The network device 100 comprises a wireless module. The wireless module is utilized for forming a wireless network in a neighborhood of the network device 100. The network device 100 may be a wireless router, an internet protocol switch (IP switch) or a WiFi base station. The network device 100 connects to a wide area network WAN through a network connection 102, wherein the wide area network WAN may be an internet. Meanwhile, the network device 100 and electronics devices 110, 112, 114 form as a local area network. For example, the network device 100 may connect to the electronic device 100 through a network cable, or the network device 100 may connect to the electronics devices 112, 114 through wireless connections. The electronic device 100 may be an electronics device such as a desktop, a laptop. The electronics devices 112, 114 may be the electronics devices such laptops, smart phones, tablets, smart watches. In other words, the electronics devices 110, 112, 114 connect to the wide area network WAN through the network device 100 and the network connection 102. However, when the network connection 102 is disconnected because of factors such as the server between the network device 100 and the wide area network WAN being broken, or transmission line being damaged, the electronics devices 110, 112, 114 are not able to connect to the wide area network WAN.

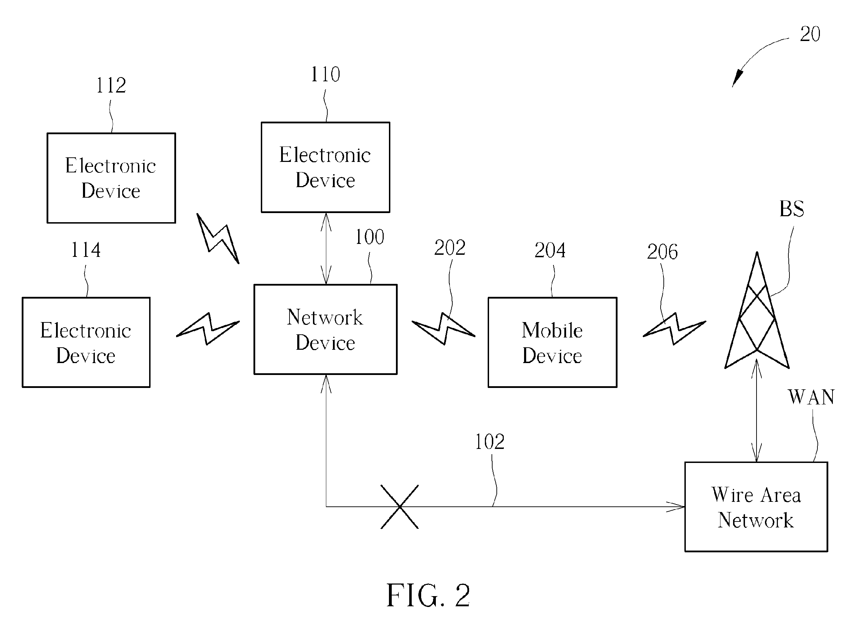

To reduce the inconvenience cause by the network device 100 being not able to access the wide area network WAN through the network connection 102, the present invention utilizes mobile devices to establish another connection path between the network device 100 and the wide area network WAN. FIG. 2 is a schematic diagram of a wireless connection system 20 according to an embodiment of the present invention. The wireless connection system 20 is derived from the connection system 10, and, thus, same components use the same symbols. Compared to the connection system 10, the wireless connection system 20 further comprises a mobile device 204. The mobile device 204 may be a mobile device having a cellular network module and a subscriber identity module (SIM card) thereof, such as a smart phone, or a tablet. The mobile device 204 is able to build a wireless connection 206 with a base station BS of the cellular network, and connect to the wide area network WAN through the wireless connection 206 and the base station BS. In the wireless connection system 20, when the network connection 102 between the network device 100 and the wide area network WAN is disconnected, the network device 100 may establish a wireless connection 202 with the mobile device 204. Thus, the network device 100 may connect to the wide area network WAN through the wireless connection 202, the mobile device 204 and the base station BS. Thereby, the electronics devices 110, 112, 114 may connect to the wide area network WAN.

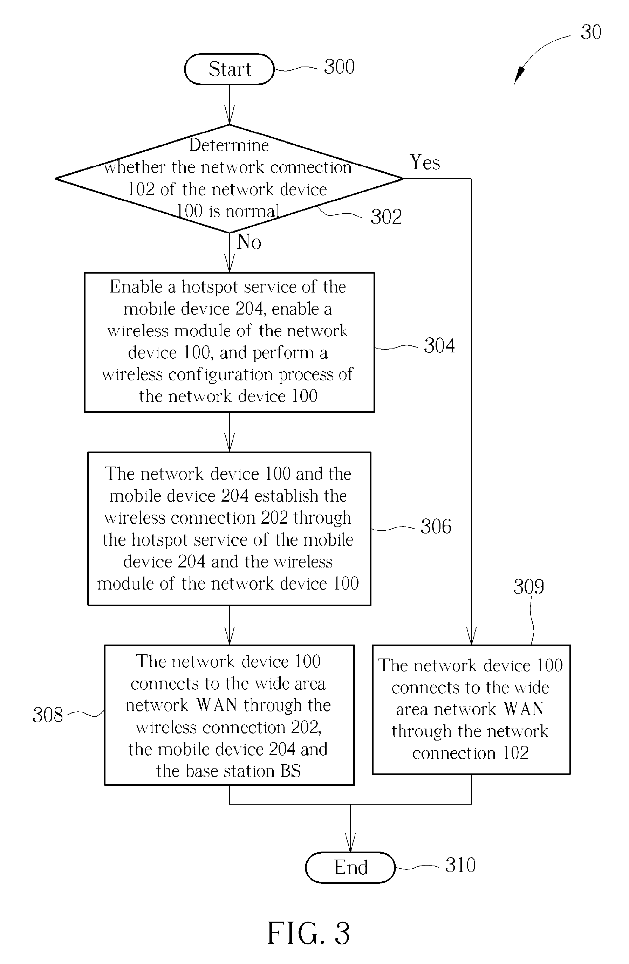

A process of the network device 100 and the mobile device 204 establishing the wireless connection 202 such that the electronics devices 110, 112, 114 are able to connect to the wide area network WAN may be referred to FIG. 3, which is a schematic diagram of a wireless connection process 30 according to an embodiment of the present invention. The wireless connection process 30 is executed by the wireless connection system 20. As shown in FIG. 3, the wireless connection process 30 comprises following steps:

### Step 300: Start.

- Step 302:: Determine whether the network connection 102 of the network device 100 is normal. If yes, go to Step 309; otherwise, go to Step 304.
- Step 304:: Enable a hotspot service of the mobile device 204, enable a wireless module of the network device 100, and perform a wireless configuration process of the network device 100.
- Step 306:: The network device 100 and the mobile device 204 establish the wireless connection 202 through the hotspot service of the mobile device 204 and the wireless module of the network device 100.
- Step 308:: The network device 100 connects to the wide area network WAN through the wireless connection 202, the mobile device 204 and the base station BS.
- Step 309:: The network device 100 connects to the wide area network WAN through the network connection 102.
- Step 310:: End.

According to the wireless connection process 30, when the network connection 102 between the network device 100 and the wide area network WAN is disconnected, the network device 100 may build up the wireless connection 202 with the mobile device 204. The network device 100 may connect to the wide area network WAN through the wireless connection 202, the mobile device 204 and the base station BS. Thereby, the electronics devices 110, 112, 114 are able to connect to the wide area network WAN.

In detail, in Step 304, the hotspot service of the mobile device 204 is enabled either automatically or manually. In an embodiment, after determining that the network connection 102 is not normal, the network device 100 may send out a prompt signal to a user indicating that the network connection 102 is disconnected. The user may manually enable the hotspot service of the mobile device after receiving the prompt signal. The prompt signal may be a light signal or a beep signal, and is not limited by what is disclosed herein. In another embodiment, the network device 100 is configured to connect to the mobile device 204 when the network connection 102 is disconnected in advance. The mobile device 204 may periodically or aperiodically check whether the network connection is normal by utilizing a mobile application (APP) installed in the mobile device, and the mobile application of the mobile device 204 may enable the hotspot service of the mobile device 204. Meanwhile, the network device 100 or the mobile device 204 may also generate signals to instruct the network device 100 to connect to the hotspot of the mobile device 204. When the hotspot of the mobile device 204 is enabled, the mobile device 204 builds up a wireless network. The mobile device 204 not only transmits and receives wireless signals of the electronics devices in a neighborhood of the mobile device 204, but also allocates internet protocol (IP) addresses to the electronics devices belonging to the lower network built by the mobile device 204. Thus, the wireless connection 206 herein is a backhaul connection of the mobile device 204, for connecting the mobile device 204 to the wide area network WAN.

From another perspective, after determining that the network connection 102 is not normal, the network device 100 enables the wireless module of the network device 100, and performs the wireless configuration process of the network device 100, which is to enable an access point mode (AP mode) and a client mode (Client mode) of the network device 100. Through the AP mode, the network device 100 provides transmission and reception of wireless signals of the electronics devices 112, 114, to maintaining the wireless connection of the electronics devices 112, 114. Through the client mode, the network device 100 become a gateway for the electronics devices 110, 112, 114 connecting to the wide area network WAN. In addition, the network device 100 have a dynamic host configuration protocol (DHCP), for allocating IP addresses to the electronics devices 110, 112, 114 belonging to the lower layer network of the network device 100. However, when the network device 100 connects to a hotspot of wireless network, IP address allocation is performed by the hotspot. Therefore, after the AP mode and the Client mode are enabled, the network device 100 may further disable the DHCP of the network device 100, so as to avoid IP address allocation being performed repeatedly.

In Step 306, through the hotspot service of the mobile device 204 and the wireless module the network device 100, the network device 100 and the mobile device 204 establish the wireless connection 202. The wireless connection 202 may perform data transmission under wireless systems such as WiFi or Bluetooth (BT). After the wireless connection 202 is established, IP addresses of the electronics devices 110, 112, 114 are allocated by the mobile device 204. In such a situation, the network device 100 can be regarded as a bridge between the local area network formed by the network device 100 and the wide area network WAN, so as to connect the wide area network WAN and the local area network formed by the electronics devices 110, 112, 114, so as to maintain the stability of the connections between the electronics devices 110, 112, 114 and the wide area network WAN.

As can be seen from the above, in comparison to the prior art, the network device 100 of the present invention may establish the wireless connection 202 with the mobile device 204, and utilize the cellular module and the SIM card of the mobile device 204 to connect to the wide area network WAN through the cellular network. The network device 100 does not have to be equipped with a build-in network interface card (NIC), or be externally connected to an NIC. Meanwhile, the unnecessary assembly and disassembly of the SIM card is avoided. The production cost of the network device 100 is reduced, and convenience of usage is enhanced.

The embodiments in the above are for illustrative purpose. Those skilled in the art may make modification and alternation accordingly, and are not limited by what is disclosed herein. For example, the network device 100 may periodically or aperiodically check whether the network connection 202 is recovered to normal. If the network device 100 checks that the network connection 102 is not recovered to normal, the network device 100 continues connecting to the wide area network WAN through the wireless connection 202. If the network connection 102 is recovered to normal, the network device 100 may send out a disable signal to indicate the mobile device 204 to disable the hotspot service. Alternatively, the network device 100 may send out a recovery signal to the user to indicate that the network connection 102 is recovered to normal, and the user may manually disable the hotspot service after receiving the recovery signal, so as to save electric power consumption of the mobile device 204.

In summary, the network device of the present invention may establish the wireless connection with the mobile device, and utilize the cellular module and the SIM card of the mobile device to connect to the wide area network through the cellular network. In comparison to the prior art, the network device does not have to be equipped with the build-in NIC, or be externally connected to the NIC. Meanwhile, the unnecessary assembly and disassembly of the SIM card is avoided. The production cost of the network device is reduced, and convenience is enhanced.

## Claims

1. A method of connecting to a wireless data network (30), **characterized by** comprising the steps of:
determining whether a network connection (102) of a network device (100) is normal;
the network device (100) establishing a wireless connection (202) with a mobile device (204) when the network connection (102) is not normal; and
the network device (100) connecting to a wide area network (WAN) through the wireless connection (202) and the mobile device (204).

2. The method of claim 1, **characterized in that** the step of the network device (100) establishing the wireless connection (202) with the mobile device (204) when the network connection (102) is not normal comprises:
enabling a hotspot service of the mobile device (204), enabling a wireless module of the network device (100), and performing a wireless configuration process of the network device (100);
the network device (100) and the mobile device (204) establishing the wireless connection (202) through the hotspot service of the mobile device and the wireless module of the network device (100).

3. The method of claim 2, **characterized in that** the step of enabling the hotspot service of the mobile device when the network connection (102) is not normal comprises:
the network device (100) sending out a prompt signal to prompt a user to enable the hotspot service of the mobile device (204).

4. The method of claims 2 or 3, **characterized in that** the method includes a further step of
the mobile device (204) checking whether the network connection (102) is normal by utilizing a mobile application installed in the mobile device (204) before the mobile device (204) enabling the hotspot service; and, if
the network connection (102) is not normal , then the mobile device (204) enables the hotspot service.

5. The method of any of claims 2-4, **characterized in that** the step of performing the wireless configuration process of the network device (204) comprises:
enabling an access point mode and a client mode of the network device (100) after the wireless module is enabled.

6. The method of any of claims 2-5, **characterized in that** the step of performing the wireless configuration process of the network device (100) comprises:
disabling a Dynamic Host Configuration Protocol (DHCP) of the network device (100).

7. The method of any of claims 1-6, **characterized in that** the mobile device (204) connects to the wide area network (WAN) through a cellular network.

8. A system for connecting to a wireless data network (20), **characterized by** comprising:
a network device (100), configured to connect to a wide area network (WAN) through a network connection (102); and
a mobile device (204), configured to connect to the wide area network (WAN) through a cellular network;
wherein the network device (100) establishes a wireless connection (202) with the mobile device (204) when the network connection (102) is not normal, such that the network device (100) connects to the wide area network (WAN) through the wireless connection (202) and the mobile device (204).

9. The system of claim 8, **characterized in that** a hotspot service of the mobile device (204) is enabled when the network connection (102) is not normal, so as to establish the wireless connection (202).

10. The system of claim 9, **characterized in that** the network device (100)is configured to send out a prompt signal to prompt a user to enable the hotspot service of the mobile device (204) when the network connection (102) is not normal.

11. The system of any of claims 8-10, **characterized in that** the mobile device (204) is further utilized for performing the following steps:
the mobile device (204) checking whether the network connection (102) is normal by utilizing a mobile application installed in the mobile device (204); and
the mobile device (204) enabling the hotspot service when the network connection (102) is not normal.

12. The system of any of claims 8-11, **characterized in that** the network device (100) is further utilized for performing the following step:
enabling a wireless module and performing a wireless configuration process, when the network connection (102) is not normal.

13. The wireless connection system (20) of claim 12, **characterized in that** the network device (100) is further utilized for performing following step:
enabling an access point mode and a client mode after the wireless module is enabled.

14. The system of any of claims 8-12, **characterized in that** the network device (100) is further utilized for performing the following step:
disabling a Dynamic Host Configuration Protocol (DHCP).
